# EUROPÄISCHE PATENTSCHRIFT

(11) **EP 1 968 911 B1**
(45) Veröffentlichungstag und Bekanntmachung des Hinweises auf die Patenterteilung: **13.05.2009**
(21) Anmeldenummer: 06819029.7
(22) Anmeldetag: 13.12.2006
(51) Int. Cl.: C04B 24/08

(54) **NEUE RIZINUSÖLBASIERENDE POLYOLEMULSIONEN**
NEW CASTOR OIL-BASED POLYOL EMULSIONS
NOUVELLES EMULSIONS DE POLYOL A BASE D'HUILE DE RICIN

(30) Priorität: 24.12.2005 DE 102005062269
(43) Veröffentlichungstag der Anmeldung: 17.09.2008
(73) Patentinhaber: Bayer MaterialScience AG, 51368 Leverkusen (DE)
(72) Erfinder: KÖHLER, Burkhard, D-51373 Leverkusen (DE); RUTTMANN, Gerhard, D-51399 Burscheid (DE)
(86) Internationale Anmeldenummer: PCT/EP2006/011999
(87) Internationale Veröffentlichungsnummer: WO 2007/073866

(56) Entgegenhaltungen:
- GB-A- 509 929
- GB-A- 1 413 121
- JP-A- 2001 302 304
- US-A- 3 351 574

## Beschreibung

Die Erfindung betrifft neue Polyolemulsionen aus Ricinusöl und Monoepoxiden und daraus zusammen mit Methylendiphenyldiisocyanat (MDI) und Zement hergestellte Polymerzemente.

Die Herstellung von Polymerzementen aus Ricinusölemulsionen, MDI und Zement ist bekannt und in GB 2353993 beschrieben. Die dort verwendeten Ricinusölemulsionen sind jedoch relativ hochviskos und daher nicht optimal verarbeitbar.

JP 2001-302304 und JP 2004067463 beschreiben Polyolemulsionen aus Ricinusöl und den Umsetzungsprodukten von Ricinolsäure mit Monoepoxiden. Die Viskosität dieser Emulsionen ist gegenüber reinen Rizinusölemulsionen erniedrigt, jedoch erfordert die Herstellung der Ricinolsäure-Monoepoxid-Addukte einen zusätzlichen Reaktionsschritt.

Ferner enthalten die Ricinolsäure-Monoepoxid-Addukte noch OH-Gruppen, die zur Ausbildung von Wasserstoffbrückenbindungen befähigt sind und dadurch die Viskosität erhöhen.

Wünschenswert sind daher Emulsionen aus Ricinusöl und einem Reaktivverdünner, der keine OH-Gruppen enthält, aber unter den basischen Reaktionsbedingungen der Polymerzementbildung freie OH-Gruppen bildet, die dann unter Vernetzung mit dem MDI abreagieren.

Überraschenderweise wurde gefunden, dass sich aus Ricinusöl und Monoepoxiden niedrigviskose Emulsionen mit den gewünschten Eigenschaften herstellen lassen, die sich mit MDI und Zement zu Polymerzementen umsetzen lassen. Das Monoepoxid reagiert unter den Reaktionsbedingungen der Bildung der Polymerzements unter Ringöffnung zum entsprechenden Glykol und stellt damit die geforderten OH-Gruppen bereit.

Gegenstand der Erfindung sind daher Emulsionen enthaltend
25 bis 45 Gewichtsteile, bevorzugt 25 bis 35 Gewichtsteile Wasser,
45 bis 69,5 Gewichtsteile, bevorzugt 55 bis 63 Gewichtsteile Ricinusöl,
5 bis 30 Gewichtsteile, bevorzugt 7 bis 15 Gewichtsteile Monoepoxide, und
0,5 bis 5 Gewichtsteile Hilfs- und Zusatzstoffe.

Ricinusöl im Sinne der Erfindung sind Ester des Glycerins mit Ricinolsäure, wobei durchschnittlich mindestens zwei der OH-Gruppen des Glycerins mit Ricinolsäure verestert sind. Es können sowohl technische als auch pharmazeutische Qualitäten eingesetzt werden.

Monoepoxide im Sinne der Erfindung sind alle Verbindungen mit einer Epoxygruppe pro Molekül. Bevorzugte Monoepoxide entsprechen den allgemeinen Formeln (I) bis (IV), 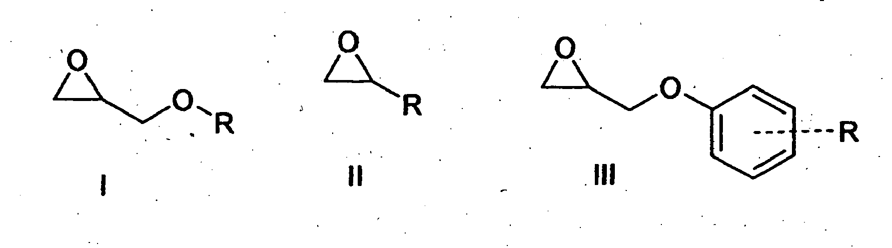 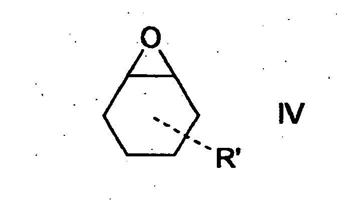 wobei
R ein C4- bis C18-Alkylrest oder ein Tri(m)ethoxysilylpropylrest und
R' Wasserstoffatom, ein C1- bis C4-Alkylrest oder eine Vinylgruppe ist.

Bevorzugt werden Monoepoxide der Formel I oder II, besonders bevorzugt der Formel I eingesetzt, wobei R für einen C8 bis C16-Alkylrest steht.

Hilfs- und Zusatzstoffe können beispielsweise nichtionische Emulgatoren, Entschäumer und Verdicker sein, welche in einer bevorzugten Ausführungsform als Hilfs- und Zusatzstoffe in den erfindungsgemäßen Emulsionen enthalten sind.

Als nichtionische Emulgatoren können ethoxylierte Fettalkohole oder Alkylphenole, Fettsäureester von Polyethylenoxiden, Fettsäureester von Sorbitan oder ethoxylierte Sorbitan, Blockcopolyether von Polyethylenoxid mit anderen Polyepoxiden, vorzugsweise Polypropylenoxid, ethoxylierte Fettamine oder Fettamide oder Glykoside oder Ester von Zuckern eingesetzt werden. Es können auch Mischungen von nichtionischen Emulgatoren eingesetzt werden, wobei der HLB-Wert der Gesamtmischung 8 bis 19, bevorzugt 10 bis 14 beträgt.

Der HLB-Wert ist für reines Polyethylenoxid 20 und für reines Polyolefin 0, wobei der HLB-Wert proportional zum Polyethylenoxidgehalt ansteigt. Dies kann durch die Formel HLB = 20 (M_{b}/M) ausgedrückt werden, wobei M_{b} die Molmasse des hydrophilen Anteils und M die Molmasse des gesamten Moleküls ist (Methode nach Griffin).

Als Entschäumer können z.B. Silikone, ethergruppenhaltige Silikone, hydrophobierte Kieselsäuren, nichtionische Emulgatoren mit einem HLB-Wert von 3 bis 10, oder Mineralöle eingesetzt werden.

Bevorzugt werden nichtionische Emulgatoren auf Basis von Sorbitanestern oder Mineralöle eingesetzt.

Als Verdicker können Cellulosederivate, wie Hydroxyethyl-, Methyl-, Hydroxypropyl- oder Carboxymethylether eingesetzt werden. Ferner können Verdicker auf Polyurethan- oder Polyharnstoffbasis, anorganische Sole. wie Aluminiumhydroxid, Polyvinylalkohole, Polyvinylpyrrolidone oder (Co)polymere der (Meth)acrylsäure oder des (Meth)acrylamids eingesetzt werden. Säurefunktionelle Polymere werden vorzugsweise in Form ihrer Alkali- oder Ammoniumsalze eingesetzt

Bevorzugte Verdicker sind Cellulosederivate der vorstehend genannten Art, besonders bevorzugt Hydroxyethylcellulose.

Die erfmdungsgemäßen Emulsionen können zusätzlich noch Polyole, wie Glycerin, oligomere Glycerine, Trimethylolethan, Triethylolpropan, Zuckeralkohole, Zucker, Zuckerderivate oder alkoxylierte Amine, wie Triethanolamin oder propoxyliertes Ethylendiamin enthalten. Die Amine können mit Carbonsäuren oder Hydroxycarbonsäuren, wie Zitronen- oder Weinsäure neutralisiert sein.

Die Viskositäten der erfindungsgemäßen Emulsionen betragen typischerweise 50 bis 5000 mPas, bevorzugt 90 bis 300 mPas bei 23°C.

Die Emulsionen enthalten als Hilfs- oder Zusatzstoffe bevorzugt 1 bis 3 Gewichtsteile Sorbitanmonolaurat als Emulgatoren und Entschäumer, wodurch zusätzlich eine bessere Wasserfestigkeit der Polymerzemente erreicht wird, bestimmt durch "bleaching", verursacht durch stehendes Wasser (visueller Vergleich).

Im Rahmen der Hilfs- und Zusatzstoffe sind als Verdicker Hydroxyalkylderivate der Cellulose besonders geeignet.

Allgemein sind Hilfs- und Zusatzstoffe bevorzugt, die isocyanatreaktive Gruppen, wie OH- oder NH-Gruppen enthalten.

In einer besonders bevorzugten Ausführungsform sind wenigstens 1 Gewichtsteil eines Esters des Sorbitans, mindestens 0,5 Gewichtsteile ethoxylierter Fettalkohole und mindestens 0,1 Gewichtsteile Hydroxyethylcellulose als Hilfs- und Zusatzstoffe enthalten.

Die Herstellung der erfindungsgemäßen Emulsionen erfolgt durch Mischen der Komponenten unter Scherung mit Rührern oder Strahldispergatoren, wobei vorzugsweise die fettlöslichen Komponenten im Ricinusöl und die wasserlöslichen Komponenten im Wasser vorgelöst werden. Es ist dabei unerheblich, ob die wässrige Phase zur Ölphase dosiert wird oder umgekehrt.

Ein weiterer Gegenstand der Erfindung sind Polymerzemente enthaltend
10 bis 25 Gewichtsteile der erfindungsgemäßen Emulsionen,
10 bis 40 Gewichtsteile MDI und
35 bis 80 Gewichtsteile Zement.

Grundsätzlich können als MDI (Methylendiphenyldiisocyanat) die bekannten Phosgenierungsprodukte der Kondensate von Anilin mit Formaldehyd eingesetzt werden. Dies können sowohl die monomeren MDI-Isomere mit zwei aromatischen 6-Ringen pro Molekül als auch die höhermolekularen MDI-Typen sein, die pro Molekül drei oder mehr aromatische 6-Ringe enthalten. Darüber hinaus können auch die auf den vorstehend genannten MDI-Typen basierenden höhermolekularen Folgeprodukte mit Isocyanurat-, Allophanat-, Urethan-, Carbodiimid-, Urethonimin- und/oder Uretdiongruppen eingesetzt werden.

Bevorzugt wird MDI eingesetzt, das 30 bis 85 Gew.-% an MDI-Isomeren mit zwei aromatischen 6-Ringen pro Molekül und 15 bis 70 Gew.-% an höhermolekularen MDI-Typen enthält, die pro Molekül drei oder mehr aromatische 6-Ringe enthalten.

Zemente im Sinne der Erfindung sind hydraulische Bindemittel, die aus anorganischen, nichtmetallischen, fein aufgeteilten Stoffen, die mit Wasser angemacht selbstständig erhärten und an Luft oder in Wasser fest bleiben, wie z.B. Portlandzemente, Calciumaluminatzemente, Calciumsulfatzemente, hydratisierte Calciumoxide, Magnesiumoxichloridzemente und deren Mischungen mit Calciumhydroxid, Magnesiumhydroxid, Pigmenten oder Sand. Die vorstehend genannten Zemente sind ausführlich in GB 1192864 beschrieben. Eine weitere Beschreibung der Zemente erfolgt in DIN 1164 PR EN 197/1. Bevorzugt sind Zemente, wie z.B. Portlandzemente, Eisenportlandzemente, Hochofenzemente, Trasszemente, Trasshochofenzemente, Ölschieferzemente oder Tonerdezemente, die mindestens 23 Gew.-% CaO, vorzugsweise mindestens 50 Gew.-% CaO enthalten. Vorzugsweise enthalten die erfindungsgemäß eingesetzten Zementmischungen 1 bis 10 Gew.-% Calciumhydroxid (gelöschten Kalk).

Die Herstellung der erfindungsgemäßen Polymerzemente erfolgt durch Mischen der Komponenten unter Scherung, wobei vorzugsweise die Emulsion vorgelegt wird und dann MDI und Zement hinzugefügt werden. Nach Zumischung des MDI durchläuft die Mischung durch Emulsionsumkehr von einer Öl in Wasser zu einer Wasser in Öl Emulsion ein Viskositätsmaximum. Die Mischung härtet typischerweise nach einer Topfzeit von 8 bis 45 min zu einem nicht geschäumten Polyurethan aus, das mit Zement gefüllt ist, aus. Die erfindungsgemäßen Polymerzemente härten bei Temperaturen von 0°C bis 40°C bei beliebigen Luftfeuchtigkeiten aus und sind besonders geeignet als Fußbodenbeschichtung. Es können aber beliebige Betonwerke beschichtet werden, um ihnen Säurefestigkeit zu verleihen. Die Applikation kann durch Spachteln oder Gießen erfolgen. Während der Härtung kann durch Abrollen einer Stachelwalze das Entweichen von Kohlendioxid, das aus der Isocyanat-Wasser-Reaktion gebildet wird, erleichtert werden.

### Beispiele:

In den Beispielen wurde Ricinusöl 1 DIN 55939 eingesetzt.

Die Messung der Viskosität erfolgte nach DIN EN ISO 3219/A3 bei einem Schergefälle von 240 1/s und 21°C
- Polypox R24:: C14-C16-Alkyl-glycidylether, Handelsprodukt der UPPC AG, Mietingen-Baltringen, DE
- Ruetapox EPD HD:: 1,6-Hexandiol-diglycidylether, Handelsprodukt der Bakelite AG, Duisburg, DE
- Wallinat SML:: Sorbitanmonolaurat, Handelsprodukt der Wall Chemie GmbH, Kempen, DE
- Vanquish 100: N-Butyl-1,2-benzisothiazolin-3-on, Handelsprodukt der Avecia Biocides, Frankfurt am Main, DE
- Byk 501:: Lösung schaumzerstörender Polymere, silikonfrei, Handelsprodukt der BYK Chemie GmbH, Wesel, DE
- Natrosol Typ 250LR:: Hydroxyethylcellulose, die Brookfield-Viskosität einer 5%igen Lösung in Wasser bei 25°C beträgt 100 - 180 mPas, Handelsprodukt der Hercules International Ltd., GM Rijswijk, NL
- Tergitol 15S40:: C15-Monoalkylether eines Polyethylenglykols mit einem Polymerisationsgrad von 40, Handelsprodukt der DOW Chemical Company, Midland, Michigan, USA
- Desmodur^{®} XP 2551:: oligomeres MDI, Handelsprodukt der Bayer MaterialScience AG, Leverkusen DE
- Als Zementmischung (1kg) wurde eingesetzt:: 735 g Sand, Korngrößenspektrum: 0,3mm - 0,8mm
9g anorganisches Pigment (Fe2O3)
222g Portlandzement, weiß
31g Calciumhydroxid
3g Weißöl (Mineralöl)

Die Verarbeitungszeit wurde durch Behandlung der aufgetragenen Schicht mit einer Stachelwalze gemessen. Wenn, bestimmt durch visuelle Begutachtung, die Vertiefungen durch die Stachelwalze nicht mehr verfließen, ist das Ende der Verarbeitungszeit erreicht.

### Beispiel 1 (erfindungsgemäß)

Man legte die Mischung aus 60 kg Ricinusöl, 10 kg Polypox R24, 1,85kg Wallinat SML, 0,1 kg Vanquish 100 und 1,2kg Byk 501 unter Scherung vor und pumpte die Mischung aus 32kg VE-Wasser, 1 kg Natrosol Typ 250LR und 0,65 kg Tergitol 15S40 hinzu. Man erhielt eine Emulsion, die nach 30d bei Raumtemperatur, nach 30d bei 50°C und nach 30d bei 3°C stabil blieb. Die Viskosität betrug 140 mPas bei 23°C.

116g dieser Mischung wurden zunächst mit 157,9g Desmodur XP 2551 und anschließend mit 726 g der Zementmischung unter Scherung vermischt. Die Verarbeitungszeit betrug 18 min.

### Beispiel 2 (nicht erfindungsgemäß)

Man verfuhr wie in Beispiel 1 beschrieben, wobei Polypox R24 durch die gleiche Menge Ruetapox EPD HD ersetzt wurde. Man erhielt eine Emulsion, die nach 30d bei Raumtemperatur stabil blieb, nach 30d bei 50°C bei einer Füllhöhe von 5,5cm eine wässrige Phase von 0,1 cm Höhe abschied und nach 30d bei 4°C stabil blieb. Die Viskosität betrug 210 mPas bei 23°C.

116g dieser Mischung wurden zunächst mit 157,9g Desmodur XP 2551 und anschließend mit 726 g der Zementmischung unter Scherung vermischt. Die Verarbeitungszeit betrug 8 min, was für eine sichere Verarbeitung zu kurz ist.

### Beispiel 3 (nicht erfindungsgemäß)

Man verfuhr wie in Beispiel 1 beschrieben, wobei Polypox R24 durch die gleiche Menge n-Butylbenzylphthalat ersetzt wurde. Man erhielt eine Emulsion, die nach 30d bei Raumtemperatur, nach 30d bei 50°C und nach 30d bei 3°C stabil blieb. Die Viskosität betrug 190 mPas bei 23°C.

### Beispiel 4 (nicht erfindungsgemäß)

Man verfuhr wie in Beispiel 1 beschrieben, wobei Polypox R24 durch die gleiche Menge an zusätzlichem Ricinusöl ersetzt wurde. Man erhielt eine Emulsion, die nach 30d bei Raumtemperatur, nach 30d bei 50°C und nach 30d bei 3°C stabil blieb. Die Viskosität betrug 270 mPas bei 23°C.

## Patentansprüche

1. Emulsionen enthaltend
25 bis 45 Gewichtsteile Wasser,
45 bis 69,5 Gewichtsteile Ricinusöl,
5 bis 30 Gewichtsteile Monoepoxide, und
0,5 bis 5 Gewichtsteile Hilfs- und Zusatzstoffe.

2. Emulsionen gemäß Anspruch 1, **dadurch gekennzeichnet, dass** als Monoepoxide Verbindungen der Formel (I) enthalten sind, 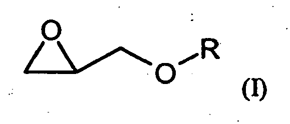 wobei R ein C₈ bis C₁₆-Alkylrest ist.

3. Emulsionen gemäß Anspruch 1 oder 2, **dadurch gekennzeichnet, dass** als Hilfs- und Zusatzstoffe nichtionische Emulgatoren auf Basis von Sorbitanestern, Mineralöle und/oder Hydroxyethylcellulose enthalten sind.

4. Emulsionen gemäß einem der Ansprüche 1 bis 3, **dadurch gekennzeichnet, dass** diese eine Viskosität von 90 bis 300 mPas bei 23°C aufweisen.

5. Polymerzemente enthaltend
10 bis 25 Gewichtsteile einer Emulsion gemäß einem der Ansprüche 1 bis 4,
10 bis 40 Gewichtsteile MDI (Methylendiphenyldiisocyanat) und
35 bis 80 Gewichtsteile Zement.

6. Polymerzemente gemäß Anspruch 5, **dadurch gekennzeichnet, dass** als MDI eine Mischung mit 30 bis 85 Gew.-% an MDI-Isomeren mit zwei aromatischen 6-Ringen pro Molekül und 15 bis 70 Gew.-% an höhermolekularen MDI-Typen enthält, die pro Molekül drei oder mehr aromatische 6-Ringe enthalten.

7. Polymerzemente gemäß Anspruch 5 oder 6, **dadurch gekennzeichnet, dass** die eingesetzten Zemente mindestens 23 Gew.-% CaO und 1 bis 10 Gew.-% Calciumhydroxid enthalten.

8. Formkörper und/oder Bauteile erhältlich aus Polymerzementen gemäß einem der Ansprüche 5 bis 7.

## Claims

1. Emulsions containing
25 to 45 parts by weight water,
45 to 69.5 parts by weight castor oil,
5 to 30 parts by weight monoepoxides and
0.5 to 5 parts by weight auxiliary substances and additives.

2. Emulsions according to claim 1, **characterised in that** compounds of formula (I), 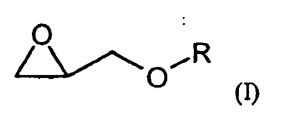 wherein R is a C₈ to C₁₆ alkyl radical,
are contained as monoepoxides.

3. Emulsions according to claim 1 or 2, **characterised in that** nonionic emulsifiers based on sorbitan esters, mineral oils and/or hydroxyethyl cellulose are contained as auxiliary substances and additives.

4. Emulsions according to one of claims 1 to 3, **characterised in that** they have a viscosity of 90 to 300 mPas at 23°C.

5. Polymer cements containing
10 to 25 parts by weight of an emulsion according to one of claims 1 to 4,
10 to 40 parts by weight MDI (methylene diphenyl diisocyanate) and
35 to 80 parts by weight cement.

6. Polymer cements according to claim 5, **characterised in that** a mixture with 30 to 85 wt.% of MDI isomers with two aromatic 6-membered rings per molecule and 15 to 70 wt.% of higher molecular weight MDI types which contain three or more aromatic 6-membered rings per molecule is contained as MDI.

7. Polymer cements according to claim 5 or 6, **characterised in that** the cements used contain at least 23 wt.% CaO and 1 to 10 wt.% calcium hydroxide.

8. Moulded articles and/or components obtainable from polymer cements according to one of claims 5 to 7.

## Revendications

1. Emulsions contenant
25 à 45 parties en masse d'eau,
45 à 69,5 parties en masse d'huile de ricin,
5 à 30 parties en masse de monoépoxydes, et
0,5 à 5 parties en masse d'adjuvants et additifs.

2. Emulsions selon la revendication 1 **caractérisées en ce que** sont contenus comme monoépoxydes des composés de formule (I) : 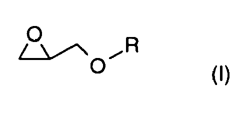 où R est un groupement C₈ à C₁₆-alkyle.

3. Emulsions selon la revendication 1 ou 2 **caractérisées en ce que** sont contenus comme adjuvants et additifs des émulsifiants non ioniques à base d'esters de sorbitan, d'huiles minérales et/ou d'hydroxyéthylcellulose.

4. Emulsions selon l'une des revendications 1 à 3 **caractérisées en ce qu'**elles présentent une viscosité de 90 à 300 mPas à 23°C.

5. Ciments avec polymère contenant
10 à 25 parties en masse d'une émulsion selon l'une des revendications 1 à 4,
10 à 40 parties en masse de MDI (diisocyanate de méthylènediphényle) et
35 à 80 parties en masse de ciment.

6. Ciments avec polymère selon la revendication 5 **caractérisés en ce qu'**est contenu comme MDI un mélange avec 30 à 85 % en masse d'isomères de MDI ayant deux 6-cycles aromatiques par molécule et 15 à 70 % en masse de types de MDI de plus haute masse moléculaire qui contiennent par molécule trois ou plus de trois 6-cycles aromatiques.

7. Ciments avec polymère selon la revendication 5 ou 6 **caractérisés en ce que** les ciments utilisés contiennent au moins 23 % en masse de CaO et 1 à 10 % en masse d'hydroxyde de calcium.

8. Corps mis en forme et/ou éléments constitutifs pouvant être obtenus à partir de ciments avec polymère selon l'une des revendications 5à7.
